Europäisches Patentamt

European Patent Office

Office européen des brevets

(11) Publication number: **0 408 821 A1**

## EUROPEAN PATENT APPLICATION

(21) Application number: 89830335.9

(22) Date of filing: 18.07.89

(51) Int. Cl.⁵: **B60Q 1/38**

(43) Date of publication of application:
23.01.91 Bulletin 91/04

(84) Designated Contracting States:
**DE ES FR GB**

(71) Applicant: **CAVIS CAVETTI ISOLATI S.p.A.**
**Via Roma, 31**
**I-15023 Felizzano (Alessandria)(IT)**

(72) Inventor: **Codrino, Giuseppe Cavis Cavetti**
**Isolati S.p.A.**
**Via Roma, 31**
**I-15023 - Felizzano (Alessandria)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) Circuit for controlling the direction lights of motor vehicles.

(57) The circuit comprises as a main control element for controlling the emergency and direction lighting functions of the lamps an integrated circuit chip, having a plurality of input pins and a plurality of output pins, some of the input pins consisting of actuating/deactuating pins and being selectively coupled to the ground, through signal contacts. Other output pins are coupled to the motor vehicle signalling lamps which are coupled to one another in parallel.

Fig. 4

# CIRCUIT FOR CONTROLLING THE DIRECTION LIGHTS OF MOTOR VEHICLES

## BACKGROUND OF THE INVENTION

The present invention relates to a circuit for controlling the direction lamps or lights, with an emergency function, of motor vehicles, in particular cars and the like.

As is known, motor vehicles in general are provided with a control circuit for controlling the left and right direction signalling lamps, which are specifically provided for signalling a change of the travel direction of the motor vehicle.

This control circuit is generally energized through a lever which is associated, in a pivotable way, with the motor vehicle steering wheel.

Moreover, the most recent motor vehicles or cars further comprise a push-button for driving the direction lamps with an emergency function.

This control, in particular, energizes in an intermittent way to the on and off state both the right and the left signalling lamps.

Known lamp controlling circuits, however, have some drawbacks, the main of which is that they comprise a high number of power contacts.

This requires a comparatively long wiring time with rather high assembling costs.

Moreover, known circuit of the above in dicated type are subjected to frequent malfunctions with consequent expensive repairing operations.

Integrated circuit chip lamp controlling circuits are moreover known: however, these known electronic circuits also comprise a comparatively high number of power outer contacts which negatively affect both the wiring time and the device costs, as well as the reliability of the circuit.

## SUMMARY OF THE INVENTION

Accordingly, the aim of the present invention is to provide such a motor vehicle lamp or light control circuit in which the motor vehicle lamps are controlled by a single integrated circuit (IC) chip.

Within the scope of the above mentioned aim, a main object of the present invention is to provide a control circuit, of the above mentioned type, which is very simple and comprises, in addition to the mentioned integrated circuit chip, a very reduced number of outer switching elements, in particular of power electric contacts.

Another object of the present invention is to provide such a lamp or light control circuit which can be wired in a very reduced time.

Yet another object of the present invention is to provide such a lamp control circuit which is very safe and reliable in operation.

Yet another object of the present invention is to provide such a lamp control circuit in which the direction lamps can be energized through a simple signal contact that is without the use of expensive and large size power contacts.

Yet another object of the present invention is to provide such a lamp control circuit in which the on/off type of control signals can be transmitted either through push-button-switch elements or through contacts driven by levers or optical devices.

Yet another object of the present invention is to provide such a lamp control circuit in which the direction lamps can be disenergized in an automatic way, through simple sensor elements provided for detecting the angular position and/or rotation of the motor vehicle steering column, to drive corresponding disenergizing signal contacts.

Yet another object of the present invention is to provide such a lamp control circtuit which is also specifically designed to properly control conventional emergency and direction lamps and is moreover adapted for signalling possible failed lamps.

Yet another object of the present invention is to provide such a lamp control circuit, specifically designed for cars and the like, which is not affected in any appreciable degree by outer electrical noise and the like.

According to an aspect of the present invention, the above mentioned aim and objects, as well as yet other objects, which will become more apparent hereinafter, are achieved by a motor vehicle lamp control circuit, specifically designed for controlling direction and emergency signalling lamps of a motor vehicle which has the feature stated in the characterizing portion of claim 1.

Further advantageous embodiments of the circuits according to the invention are indicated in the sub-claims.

## BRIEF DESCRIPTION OF THE DRAWINGS

Further features and advantages of the motor vehicle control circuit according to the invention, specifically designed for cars and the like, will become more apparent from the following detailed description of some preferred embodiments of said control circuits which are illustrated, by way of an indicative but not limitative example, in the accompanying drawings, where:

Figure 1 shows a circuit diagram of a known control circuit as conventionally used for controlling the direction lamps of a motor vehicle;

Figure 2 shows a further circuit diagram using the circuit of figure 1 and an additional switch, of known type, comprising a plurality of electrical contacts in order to control the lamps in an emergency mode of operation;

Figure 3 shows a diagram of a possible embodiment of a lamp control circuit integrated on a single electronic chip;

Figure 4 shows a further possible circuit diagram illustrating an application of the integrated circuit for controlling the signalling lamps of a motor vehicle; and

Figure 5 shows a table useful for understanding the operation of the lamp control circuit according to the invention.


## DESCRIPTION OF THE PREFERRED EMBODIMENTS


With reference to the figures of the accompanying drawings, a known type of signalling lamp control circuit will be firstly disclosed in order to clearly illustrate the advantages provided by the inventive circuit with respect to this known circuit.

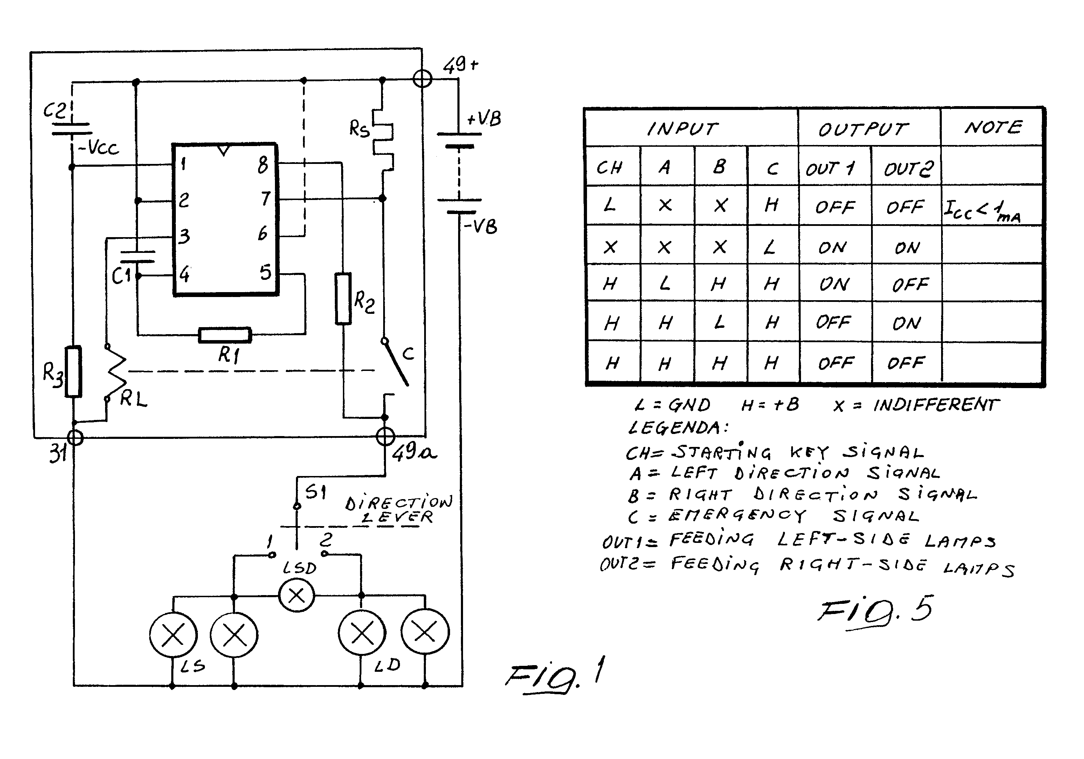

With reference to figure 1, a conventional known lamp control circuit is herein illustrated for controlling the lamps of a motor vehicle in an intermittent lighting mode of operation.

In particular, this circuit is operated through the use of a conventional direction change signalling lever.

More specifically, as the direction change control lever is actuated by the driver, the contact S1 is displaced to the position 1, as the leftward direction is selected, or to the position 2, as the rightward direction is selected.

With S1 in an actuated condition, the control circuit will enable an inner timer of the lighting module and will power supply the lamp assembly LS, LD, through the closure of the contact C of the relay RL. With the contact C in a closed condition, a current will flow through the resistor $R_S$, and the lamps LS, LD will be power supplied through S1.

In particular, the resistor $R_S$ of a very low value, usually of about 25 milliohm, is used for signalling a possible interruption of a lamp.

In normal operation, across $R_S$ there is present a set value voltage and the relay R1 will be energized with a frequency which will depend on the R1, C1 component ratio.

In the case of an interruption of a lamp filament, the current will decrease and accordingly will decrease the voltage drop across $R_S$.

This variation, sensed at the pin 7 of the integrated circuit, will actuate an inner circuit for causing the lamps to light with a frequency of a double value than the conventional lighting frequency. Usually, the signalling lamps LSD, arranged on the car dashboard, will be switched on and off with the same frequency, since they are wired as shown in figure 1.

As the lighting frequency of the lamps increases, this signalling lamps LSD will indicate the failing of a lamp.

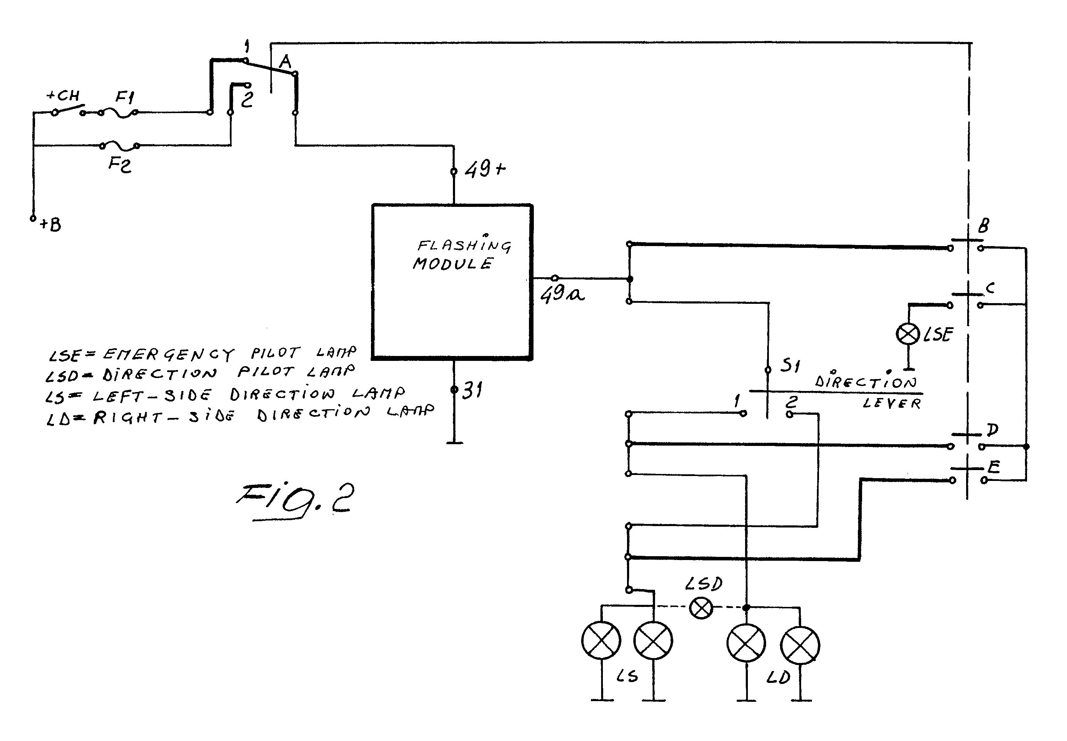

With reference to figure 2, it should be apparent that to the circuit shown in figure 1, a specific switch element has been added, shown in the right portion of the circuit diagram, in order to supply an emergency lighting function.

More specifically, by means of the mentioned switch, the mode of operation of the module can be selected: with the switch at the position 1, selected through the direction change lever, the motor vehicle lamps will be controlled so as to indicate a direction change of the motor vehicle.

With the mentioned switch at the position 2, the emergency mode of operation will be energized.

In particular, with the switch at the position 1, the circuit will be energized exclusively with the starting key at the travel position.

At the position 2, the integrated module will be directly power supplied from the motor vehicle battery, through the fuse $F_2$.

The switch sections B-C-D-E, as is shown, bypass the switch S1 and connect in parallel the lamp LS and LD assemblies, thereby providing an emergency mode of operation, which provides for a simultaneous switching on and off of all of the direction lamps of the motor vehicle.

The lamp LSE is coupled to the board instruments and is provided for signalling the on condition of the above mentioned switch.

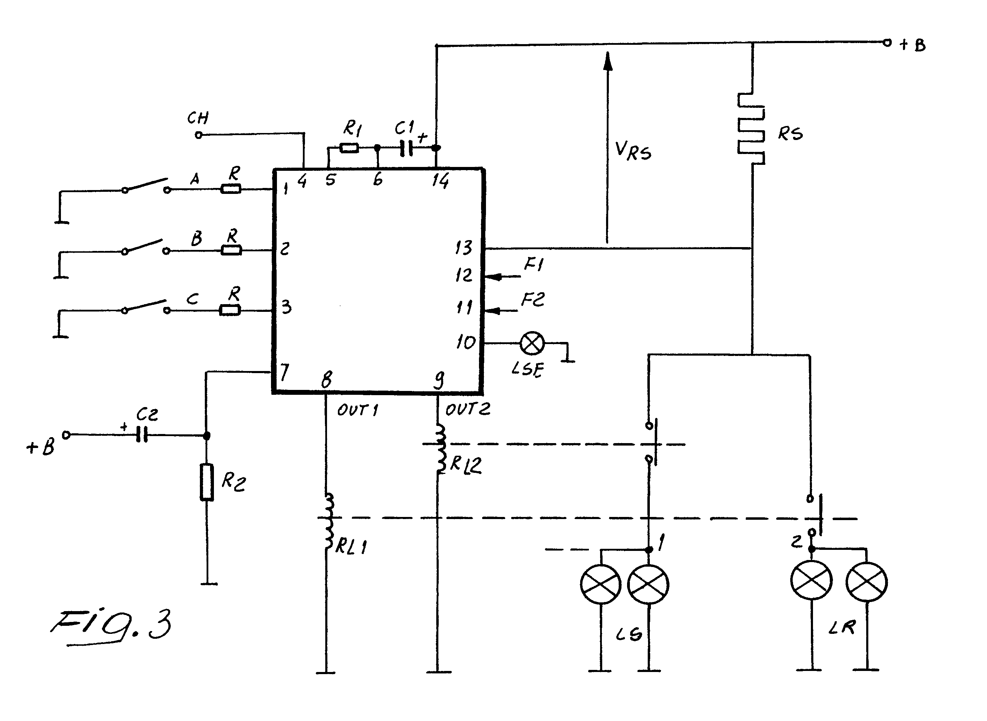

With reference to figure 3, is herein illustrated a possible practical embodiment of the circuit for controlling the direction lamps, with an emergency function, according to the invention.

As is shown, a feature of this circuit is that it is always power supplied, and, accordingly, the current drain has been specifically designed to be less than 1 millianampère.

This circuit is adapted for providing the following functions:

- a timed control of the right direction lamps;
- a timed control of the left direction lamps;
- a timed control of the emergency lamps or lights (that is a simultaneous switching on and off of the right and left direction lamps).

According to the invention, all of these functions are obtained by means of the controls A-B-C.

More specifically, the driving or control signals are in an on state as the push-button contacts connect the related inputs to the ground.

These driving or control signals can be supplied, through switches or push-buttons, or through other contacts driven by lever or by optical switches.

A main feature of this circuit is that it comprises two relays RL1, RL2, in order to switch on the signalling lamps.

The selection of the circuit operation is carried out by the integrated chip,through the input control signals, whereas in the above disclosed known circuit, the selection and driving are obtained through the power contacts of S1 of the direction changing lever.

The relays RL1, RL2, having one end thereof coupled to the pins 8 and 9 of the integrated chip and the other end thereof coupled to the ground, are energized or enabled depending on the logic diagram shown in the Table of figure 5.

More specifically, by means of the driving or control signal C there is provided the emergency function; in this function, the relays are simultaneously energized with a frequency given by the ratio of the elements R1, C1, coupled between the pins 5, 6 and 14 of the chip.The commands A and B are on exclusively as the starting key is in its travel position and they select the operation of the signalling lamps: A enables the relay RL1, whereas B enables the relay RL2.

The two relays are simultaneously enabled exclusively through the command C.

As is conventional, the commands A and B are supplied by means of the displacement of the direction changing lever and are then deactuated by a mecanical system which causes the direction changing lever to return to a central position which is also conventionally called the home or rest position.

As, on the contrary, the commands are supplied by unstable push-buttons (that is push-buttons which are active exclusively if they are held pressed), then this function is deactuated either by pressing the same push-button or pressing the push-button of the other function (commands A and B).

According to a further main aspect of the present invention, the circuit shown in figure 3 provides for deactuating the disclosed function by means of the signals F1 and F2 respectively applied to the pins 12 and 11 of the integrated cip.

These latter can usually comprise conventional steering wheel sensors adapted for reading or sensing the steering column angular position and accordingly the rotation direction of the steering column and driving suitable signal contacts.

According to yet another important aspect of the present invention, in the circuit shown in figure 3, the command C can be supplied either by a switch or by a push-button.

In this case, as the push-button is firstly pressed, the related function is enabled whereas, by a second command, that same function is disabled.

As shown, on the pin 10 of the integrated chip there is available a signal having a frequency equal to the relay frequency.

This signal is on exclusively through the command C and it is used to signal the enabling of the function.

The indications of the functions A and B can be obtained by coupling a lamp between the point 1 and ground, the point 2 and the ground, or a single signalling or warning lamp or light between the point 1 and point 2 in order to indicate the direction function, without however indicating whether it is A or B.

The resistor $R_S$ is used for establishing, by reading the voltage $V_{RS}$, a possible breaking of the filamnt of one or more lamps.

In this case, the operation is analogous to that disclosed for the conventional circuit.

From the diagram of figure 3, it should be apparent that the lamp supply current passes exclusively through the resistor $R_S$ and the relay contact.

Thus, it will be possible to greatly reduce the voltage overall drop and, consequently, it will be possible to use signal contacts for supplying the several commands, whereas in the known circuit power contacts must be used.

In addition, the number of the contacts included in the invention circuit is very small, with a consequent less wiring time and cost.

The emergency function, as it should be apparent to those skilled in the art, is obtained, according to the invention, by means of the single integrated circuit chip whereas in known lamp control circuits it is obtained, as shown, by means of a particular switch which includes at least seven electrical connections.

The elements $R_2$, $C_2$, are provided for suppressing possible electrical noises and the like.

The resistos R are used in order to protect the inputs 1-2-3.

It is moreover possible to further series connect protecting diodes and the like.

The IC providing the disclosed circuit is made in the form of semiconductor elements and is specifically designed to operate in a very reliable way in a temperature range from -40°C to +105°C.

This circuit, in particular, can consist of the type CVS 980 made by the companies MOTOROLA/SGS/AEG and provided with 14 pins.

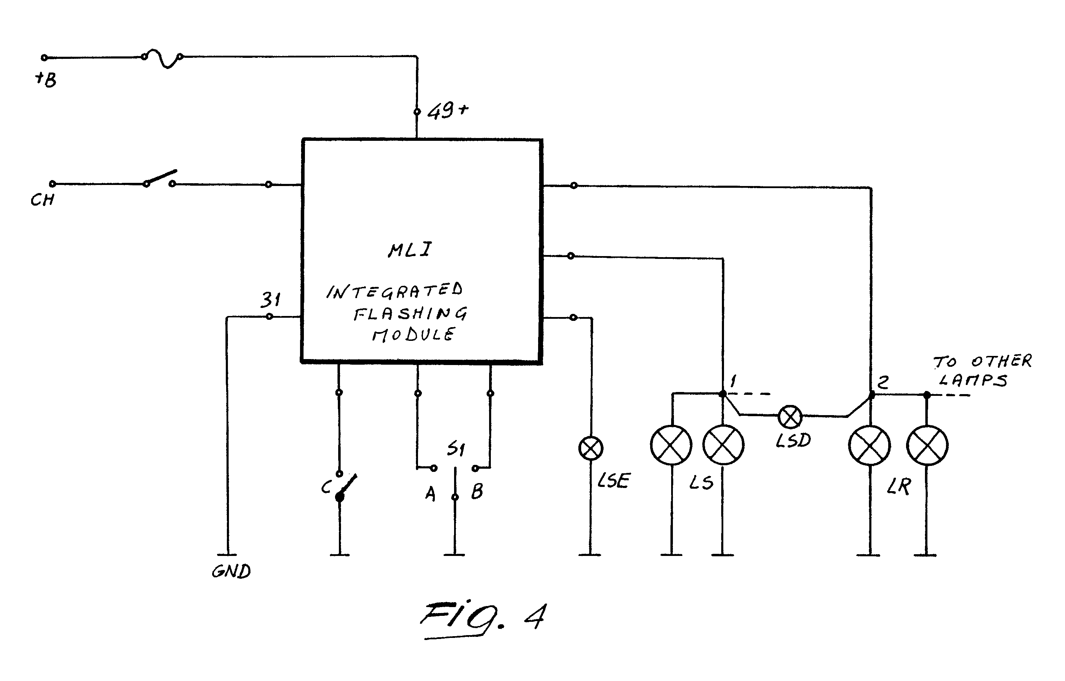

Figure 4 shows a further possible application of the integrated chip which will be not disclosed in any further details since it will be familiar to those skilled in the art, in the light of the above disclosure.

While the invention has been disclosed and illustrated with reference to a preferred embodiment thereof, it should be apparent that the disclosed embodiment is susceptible to several modifications and variations all of which will come within the spirit and scope of the appended claims.

## Claims

1. A motor vehicle lamp control circuit, specifically designed for controlling the direction and emergency signalling lamps of a motor vehicles, characterized in that said control circuit comprises an integrated circuit chip having a plurality of input pins and a plurality of output pins some preset input pins being enabling/disabling pins and can be selectively coupled to the ground, through signal contacts, and some preset output pins being coupled to at least the signalling lamps of said motor vehicle.

2. A circuit according to claim 1, characterized in that said preset input pins consists of three pins which can be respectively coupled to the ground in a mutually exclusive wau through three signal contacts for timing the switching on and off operation either of the left or of the right lamps or of both the left and right direction lamps.

3. A circuit according to claim 1, characterized in that said present output pins comprise at least a first and second pins coupled to respective end of two relay coils having the other ends thereof coupled to the ground, and at least a first pin coupled, at one side, through contacts of said relays to two pairs of said lamps and, at the other side, through a low value resistor to a pole of the battery of said motor vehicle.

4. A circuit according to claim 1, characterized in that said output pins comprises at least a first and a second pin each being respectively directly connected to a lamp set.

5. A circuit according to claim 1, characterized in that said preset input pins comprise a fourth and fifth pins for disabling the lamp switching on and off function, said fourth and fifth pins being electrically coupled to steering column sensing elements.

6. A circuit according to claim 1, characterized in that said signal contacts consist of either push-button or switch contacts.

7. A circuit according to claim 1, characterized in that said signal contacts are controlled by a controlling lever.

8. A circuit according to claim 1, characterized in that said signal contacts are operated by optical devices.

9. A circuit according to claim 1, characterized in that said preset output pins comprise at least a pin for indicating failed lamps.

10. A circuit according to one or more of the preceding claims, characterized in that said circuit is provided for directly driving said lamps through power outputs either by means of solid state relays or by means of electromecanical relays.

| INPUT | | | | OUTPUT | | NOTE |
|---|---|---|---|---|---|---|
| CH | A | B | C | OUT1 | OUT2 | |
| L | X | X | H | OFF | OFF | $I_{cc} < 1\,mA$ |
| X | X | L | L | ON | ON | |
| H | L | H | H | ON | OFF | |
| H | H | L | H | OFF | ON | |
| H | H | H | H | OFF | OFF | |

$L = GND$   $H = +B$   $X = INDIFFERENT$

LEGENDA:

CH = STARTING KEY SIGNAL
A = LEFT DIRECTION SIGNAL
B = RIGHT DIRECTION SIGNAL
C = EMERGENCY SIGNAL
OUT1 = FEEDING LEFT-SIDE LAMPS
OUT2 = FEEDING RIGHT-SIDE LAMPS

Fig.5

Fig.1

Fig. 2

LSE = EMERGENCY PILOT LAMP
LSD = DIRECTION PILOT LAMP
LS = LEFT-SIDE DIRECTION LAMP
LD = RIGHT-SIDE DIRECTION LAMP

FLASHING MODULE

+CH    F1
F2
+B

49+
49a
31

A
1
2

B
C
D
E

LSE
DIRECTION LEVER

S1
1    2

LSD
LS    LD

EP 0 408 821 A1

Fig.3

EP 0 408 821 A1

8

Fig. 4

European Patent
Office

# EUROPEAN SEARCH REPORT

Application Number

EP 89 83 0335

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | INGENIEURS DE L'AUTOMOBILE, nos. 6/7, June,July 1975, pages 187-192; F. VAN ZANTEN: "Circuit intégré pour clignotant" * Page 188, figure 1 and page 189, figure 3 * | 1 | B 60 Q 1/38 |
| A | US-A-4 290 048 (CUTLIP) * Figure 3 * | 1 | |
| | | | TECHNICAL FIELDS SEARCHED (Int. Cl.5) |
| | | | B 60 Q |

The present search report has been drawn up for all claims

| Place of search | Date of completion of the search | Examiner |
|---|---|---|
| THE HAGUE | 09-03-1990 | ONILLON C.G.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P0401)